**Europäisches Patentamt**

(19) **European Patent Office**

**Office européen des brevets**

(11) Numéro de publication: **0 123 646**
**B1**

(12) # FASCICULE DE BREVET EUROPÉEN

(45) Date de publication du fascicule du brevet:
14.10.87

(51) Int. Cl.⁴: **G 01 L 1/14**, G 01 L 5/16

(21) Numéro de dépôt: **84810073.1**

(22) Date de dépôt: **07.02.84**

(54) **Dispositif capacitif de mesure de force.**

(30) Priorité: **23.02.83 CH 1002/83**

(43) Date de publication de la demande:
**31.10.84 Bulletin 84/44**

(45) Mention de la délivrance du brevet:
**14.10.87 Bulletin 87/42**

(84) Etats contractants désignés:
**DE FR GB IT SE**

(56) Documents cité:
**EP-A-0 023 732**
**FR-A-2 174 359**
**GB-A-1 453 934**
**US-A-4 094 192**
**US-A-4 273 204**

(73) Titulaire: **Burckhardt, Christof W., Chemin du Château 20, CH- 1020 Renens (CH)**

(72) Inventeur: **Burckhardt, Christof W., Chemin du Château 20, CH- 1020 Renens (CH)**
Inventeur: **Stauber, Philipp, Avenue d'Ouchy 60, CH- 1006 Lausanne (CH)**
Inventeur: **Piller, Gérard, Chemin des Fleurs 6, CH- 1023 Crissier (CH)**

(74) Mandataire: **Hranitzky, Wilhelm Max, c/o WILLIAM BLANC & CIE Conseils en propriété industrielle SA 6, rue de la Grotte, CH- 1003 Lausanne (CH)**

EP 0 123 646 B1

## Description

La présente invention se rapporte à un dispositif de mesure de force permettant la mesure de plusieurs composantes de la force généralisée appliquée à un corps solide, le dispositif de mesure de force étant du type de ceux constitués d'une part par deux éléments rigides reliés par des moyens élastiques tels que des ressorts, et d'autre part par des moyens de mesure indépendants desdits moyens élastiques.

Par le terme "force généralisée" ou "force" on entend l'ensemble comprenant la force proprement dite et le moment qui sont appliqués sur l'un des éléments rigides du dispositif de mesure de force, l'autre élément étant maintenu fixe.

On connaît actuellement deux types de tels dispositifs de mesure de force. Les dispositifs selon le premier type comportent des jauges de contrainte fixées sur les moyens élastiques de liaison, ces jauges permettant de mesurer les déformations desdits moyens élastiques de liaison. De tels systèmes de mesure sont instables et fragiles, de sorte qu'ils nécessitent des réglages de zéro fréquents et la plupart du temps des réétalonnages. Les dispositifs selon le deuxième type remédient à ces inconvénients en ce que les moyens pour mesurer le déplacement sont indépendants des moyens élastiques de liaison et permettent de mesurer le déplacement relatif des deux éléments rigides suivant 1 à 6 degrés de liberté. Dans ce deuxième type de dispositif, les moyens élastiques de liaison sont libérés du rôle de support de jauge de contrainte, de sorte qu'il est possible de leur donner n'importe quelle forme ou dimension, et notamment de très petites ou très grandes dimensions.

Le principal inconvénient des dispositifs de mesure de force du deuxième type connus actuellement est qu'ils comportent au moins autant de capteurs de déplacement que de degrés de liberté à mesurer, chacun de ces capteurs n'étant sensible qu'à la composante du déplacement suivant son axe. De plus, chaque capteur est constitué de plusieurs parties et disposé de façon particulière. Dès que la mesure s'étend à plusieurs degrés de liberté, de tels dispositifs de mesure comportent un nombre élevé de composants dû à la présence d'une multitude de capteurs et nécessitent de nombreux moyens de réglage mécaniques de positionnement.

Le dispositif de mesure de force selon la présente invention permet de remédier aux inconvénients ci-dessus, tout en effectuant des mesures très précises.

A cet effet, la présente invention concerne un dispositif de mesure de force tel que décrit dans la revendication 1.

Par rapport à l'art antérieur, le dispositif selon l'invention est d'une construction de complexité réduite et, même si l'on désire mesurer un déplacement faisant intervenir les 6 degrés de liberté, le capteur capacitif étant unique, le nombre de composants est fortement diminué.

Le corps élastique présente la particularité qu'il peut être réalisé en une seule pièce, constituée par un cylindre creux usiné ou simplement ajouré.

Le capteur capacitif est composé de deux parties mobiles l'une par rapport à l'autre, n'ayant aucun contact mécanique l'une avec l'autre, chacune de ces parties étant solidaire d'un élément rigide du dispositif de mesure de force. Chacune des deux parties du capteur possède une surface plane supportant un ensemble d'électrodes planes, ces deux parties étant fixées aux éléments rigides, de façon que les surfaces planes se trouvent l'une en face de l'autre, les électrodes de l'une des surfaces étant séparées de celles de l'autre par un diélectrique d'épaisseur variable. Les électrodes sont reliées à un circuit électronique de détection monolithique, ce circuit permettant de traduire les valeurs des capacités en des valeurs numériques.

Les caractéristiques et avantages de l'invention seront mieux compris à l'aide de la description qui suit, donnée à titre d'exemple et qui renvoie au dessin ci-joint sur lequel la

fig. 1 représente une coupe schématique d'un dispositif selon l'invention;

fig. 2 est une vue en élévation d'une jambe élastique de ce dispositif;

fig. 3 représente une vue en perspective de 2 exemples de réalisation du corps élastique de ce dispositif;

fig. 4 est un schéma d'un capteur capacitif différentiel apte à mesurer des déplacements selon la direction X;

fig. 5 est un schéma d'un capteur capacitif de proximité muni d'électrodes de garde, permettant de mesurer des déplacements selon la direction Z;

fig. 6 est un schéma d'un capteur capacitif obtenu par combinaison des deux précédents et permettant de mesurer des déplacements selon les directions X et Z;

fig. 7 est un exemple schématique d'une réalisation d'un capteur capacitif comportant une pluralité d'électrodes qui réalisent des configurations du type de la figure 6, permettant d'obtenir un signal d'amplitude augmentée;

fig. 8 montre un exemple de réalisation des électrode planes inférieures et supérieures d'un dispositif selon l'invention;

fig. 9 montre un autre exemple de réalisation de ces électrodes dans une version améliorée.

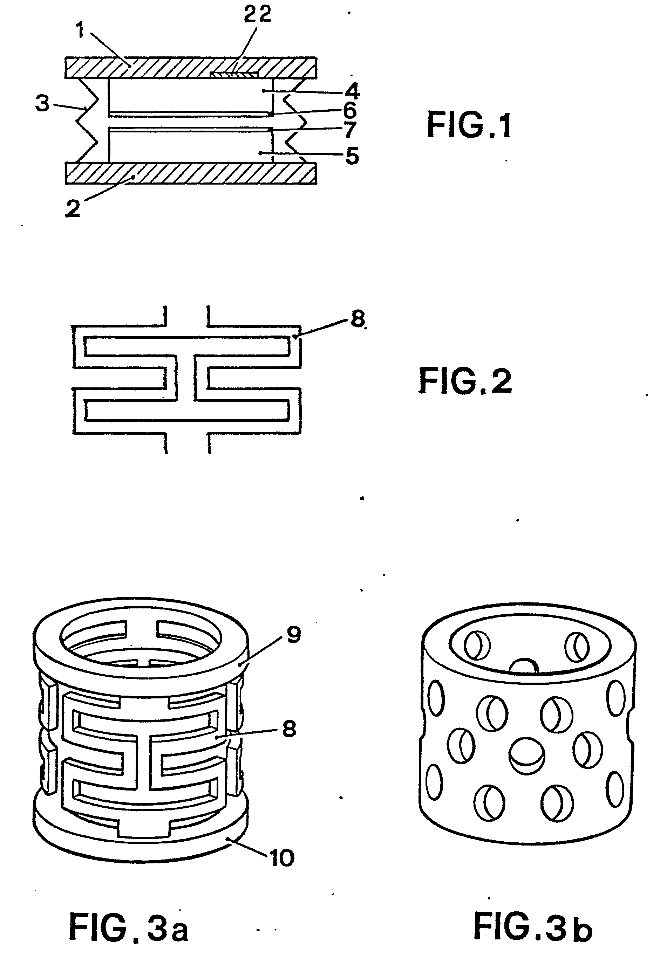

Le dispositif selon l'invention, tel que représenté schématiquement à la fig. 1, se compose de deux plaques rigides 1, 2, reliées par un corps élastique 3, et d'un capteur capacitif indépendant du corps élastique, constitué de deux disques isolant 4, 5 n'ayant aucun contact mécanique l'un avec l'autre, chaque disque étant rendu solidaire d'une des plaques rigides 1, 2. Chacun des disques isolants 4, 5 possède une surface plane supportant un ensemble d'électrodes planes 6, 7, les disques isolants étant fixés aux plaques rigides 1, 2, de façon que les électrodes 6 se trouvent disposées face aux électrodes 7, séparées par un diélectrique d'épaisseur variable.

Dans une forme préférentielle, le corps élastique est réalisé en une seule pièce (fig. 3a) par usinage d'un cylindre creux, de façon à faire apparaître deux anneaux rigides 9, 10 aux extrémités, reliés par une ou plusieurs jambes élastiques en forme de découpe 8, comprenant des coudes et des membrures. Ce mode de réalisation du corps élastique permet de lui donner une rigidité conforme à celle que l'on désire. D'autre part, le corps élastique étant réalisé en une seule pièce, la rigidité de l'encastrement des jambes élastiques est assurée.

Dans une autre forme de réalisation, le corps élastique est réalisé en une seule pièce par un cylindre creux ajouré (fig. 3b).

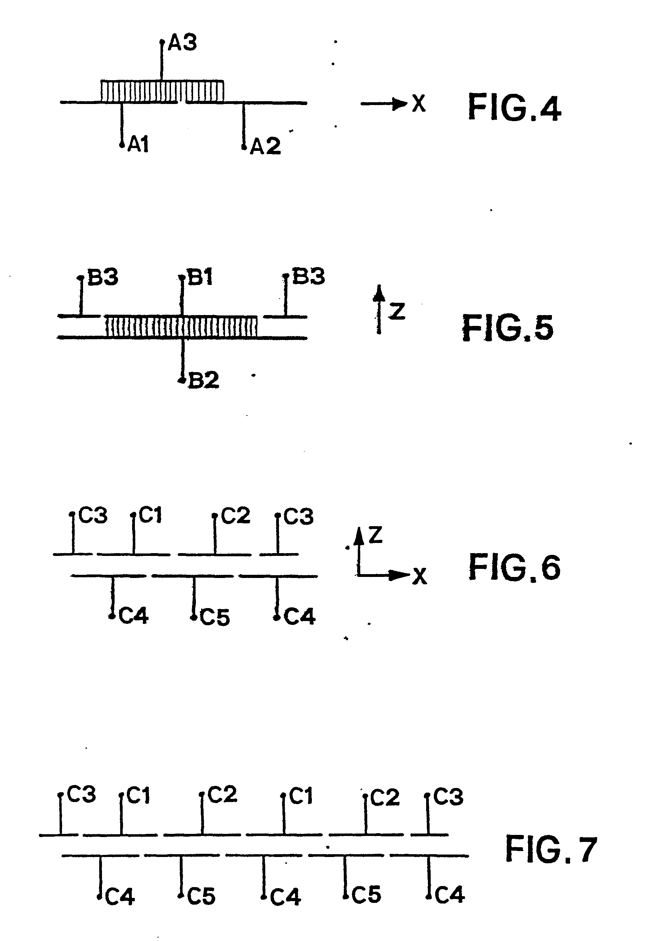

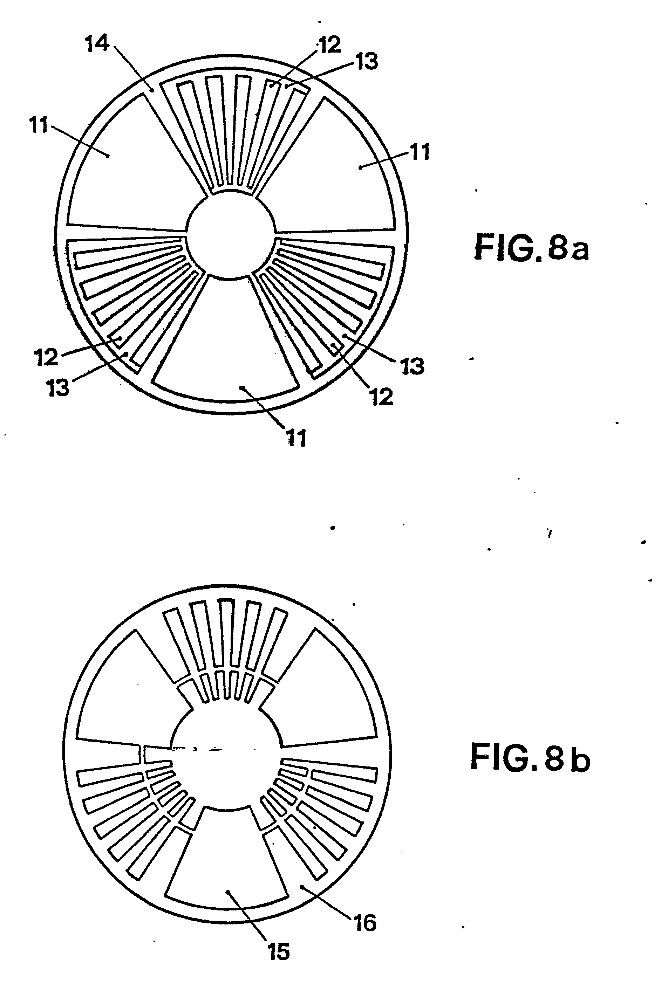

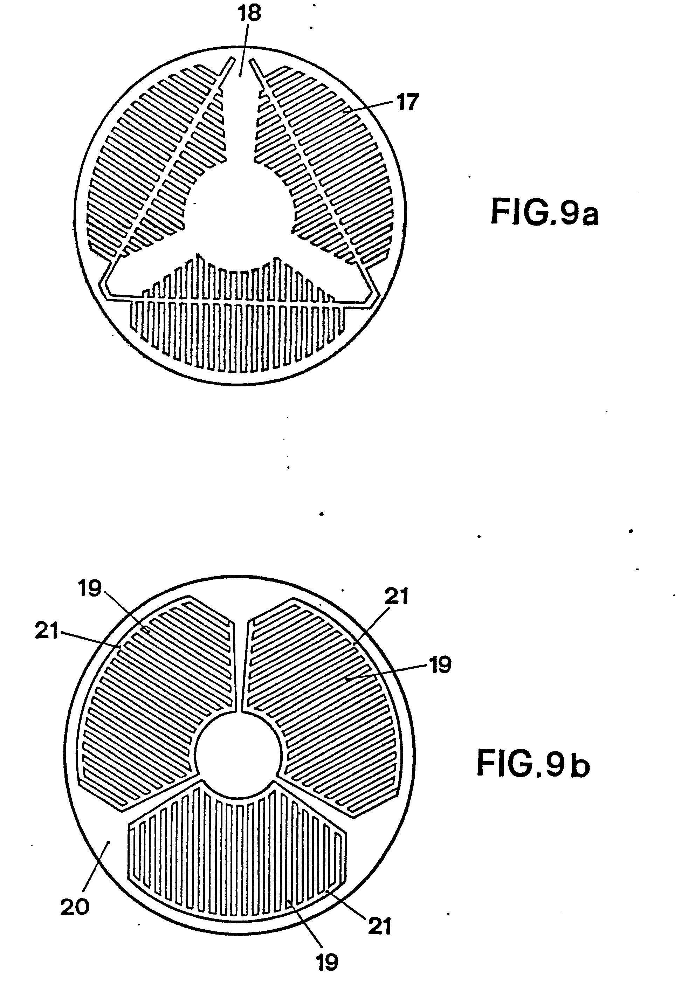

Nous allons expliquer ci-après le fonctionnement du capteur capacitif dont deux exemples sont représentés aux figures 8 et 9, en nous aidant des schémas représentés aux figures 4 à 7.

Les figures 4 et 5 représentent schématiquement deux capteurs de base permettant de mesurer des déplacements dans une direction, la mesure n'étant pas influencée par un léger déplacement dans la direction perpendiculaire. Le premier capteur permettant de mesurer un déplacement dans la direction X est un capteur capacitif différentiel, le deuxième capteur permettant de mesurer un déplacement selon la direction Z est un capteur dit "de proximité". Le capteur représenté schématiquement à la fig. 6 peut fonctionner comme un capteur de proximité du type de celui représenté de façon schématique à la fig. 5, si l'on connecte les électrodes C1 et C2, d'une part, et les électrodes C4 et C5, d'autre part, les électrodes C3 jouant alors le rôle d'électrodes de garde. Ce même capteur peut aussi fonctionner comme un capteur différentiel, du type de celui représenté à la fig. 4, lorsque les électrodes C1 et C2 sont dissociées et les électrodes C4 reliées, par exemple, à un potentiel fixe et lorsque les électrodes C5 portent un signal électrique.

Les combinaisons entre électrodes peuvent être réalisées par des moyens électroniques tels que des interrupteurs analogiques ou des portes de transmission.

Le capteur représenté schématiquement à la fig. 7, résultant d'une association de plusieurs électrodes C4 et C5, d'une part, et C1 et C2, d'autre part, permet d'obtenir un signal de puissance augmentée.

En nous basant sur ce qui précède, nous allons donner deux exemples de capteurs capacitifs. Le premier exemple est représenté à la fig. 8, la fig. 8a montrant le disque isolant supérieur recouvert par trois groupes de trois électrodes 11, 12 et 13, la fig. 8b montrant le disque isolant inférieur recouvert par deux électrodes 15, 16. La combinaison des électrodes 11 avec les électrodes 15 et 16 associées réalise trois capteurs du type de proximité, l'électrode 14 jouant le rôle d'électrode de garde. La combinaison des électrodes 12 et 13 dissociées avec les électrodes 15 et 16 dissociées permet de réaliser trois capteurs du type différentiel.

Un deuxième exemple de capteurs capacitifs est représenté à la fig. 9. Ce capteur constitue une version améliorée du précédent. Le nombre d'électrodes considérées est ici de 7 (au lieu de 9 dans le premier cas), ce qui permet une diminution du volume du traitement des signaux par rapport au premier cas. D'autre part, les surfaces disponibles étant mieux utilisées, et les combinaisons utilisées étant du type présentées aux figures 6 et 7, l'amplitude des signaux obtenus se trouve augmentée. Dans ce deuxième cas, la combinaison des électrodes 17 avec les électrodes 19 et 21 dissociées réalise des capteurs du type différentiel, alors que la combinaison des électrodes 17 et 18 associées, avec les électrodes 19 et 21 associées, réalise des capteurs du type de proximité, l'électrode 20 jouant le rôle d'électrode de garde.

La technique de réalisation des électrodes est connue. On peut par exemple les réaliser en une couche mince de chrome déposée sur un disque de verre jouant le rôle de disque isolant, la couche de chrome recouvrant toute la surface des disques. On réalise alors la séparation de la couche de chrome en plusieurs électrodes par des moyens photolithographiques. Une autre technique connue, qui est celle des circuits imprimés, consiste à déposer une feuille mince de cuivre sur un substrat en matière de résine époxy, la séparation en plusieurs électrodes étant réalisée de la même façon.

Les signaux issus des diverses combinaisons possibles des électrodes sont traités par un circuit intégré de détection 22 qui présente l'avantage d'être incorporé dans le dispositif, par exemple sous le disque isolant, ce qui évite des perturbations du signal intervenant lorsque le circuit ne peut pas être placé à proximité immédiate des électrodes. D'autre part, le circuit profite aussi du blindage appliqué au capteur.

Le fonctionnement et les algorithmes de traitement des signaux électriques de tels circuits intégrés sont connus. Un exemple en est donné dans le brevet US 4 094 192.

Un des avantages de l'utilisation du capteur capacitif tel que décrit ci-dessus, par rapport à un capteur inductif, est que le volume de traitement des signaux électriques par le circuit intégré est fortement diminué. D'autre part, l'utilisation d'un tel capteur est très avantageuse, surtout dans le cas de mesure d'un déplacement comportant plusieurs degrés de liberté, puisqu'avec un seul capteur, la méthode judicieuse consistant à réaliser différentes combinaisons des électrodes, permet de prendre en compte tous les degrés de liberté. Ce capteur capacitif s'associe très bien à un circuit monolithique de type CMOS. En effet, la notion de capacité est couramment utilisée dans ce genre de circuit, de même que les portes de transmission. Un autre avantage de l'utilisation de ce type de circuit est sa très basse consomation de courant, qui lui permet de travailler de façon autonome, avec une batterie par exemple.

**Revendications**

1. Dispositif de mesure de force comportant un élément rigide supérieur (1), un élément rigide inférieur (2) et un corps élastique (3) destiné à relier l'élément rigide supérieur et l'élément rigide inférieur, des moyens de mesure indépendants du corps élastique, solidaires des éléments rigides, constitués d'au moins un capteur capacitif comprenant une première partie (4) et une deuxième partie (5), chaque partie étant agencée de façon à présenter une surface plane supportant au moins une électrode plane, la disposition de ces parties étant telle que les électrodes de la première partie se trouvent situées face aux électrodes de la deuxième partie, séparées par un diélectrique; le capteur capacitif comportant une pluralité d'électrodes planes, au moins une électrode de l'une des deux parties (4, 5) du capteur étant décalée par rapport aux électrodes de l'autre partie, de façon que, selon le mode d'association et de couplage des électrodes, le capteur fonctionne comme un capteur différentiel ou un capteur de proximité, et un dispositif de mesure (22) relié au capteur capacitif et comportant des moyens électroniques destinés au traitement des signaux issus des diverses possibilités de couplage des électrodes et permettant la mesure de tous les degrés de liberté d'un déplacement relatif des deux éléments rigides.

2. Dispositif selon la revendication 1, caractérisé en ce que la première partie et la deuxième partie constituant le capteur consistent en des disques isolants, et dans lequel les moyens électroniques reliés aux électrodes constituent un circuit intégré monolithique incorporé dans le dispositif.

3. Dispositif selon l'une des revendications 1 à 2, caractérisé en ce que le corps élastique (3) est constitué par un cylindre creux, usiné de façon à présenter à ses deux extrémités des anneaux rigides et, dans sa partie centrale, un élément élastique en forme de découpe (8) comprenant des coudes et des membrures.

4. Dispositif selon l'une des revendications 1 à 2, caractérisé en ce que le corps élastique (3) est constitué par un cylindre creux ajouré.

**Patentansprüche**

1. Kraftmeßvorrichtung mit einem steifen oberen Bauteil (1), einem steifen unteren Bauteil (2) und einem elastischen Körper (3) zum Verbinden des steifen oberen Bauteils mit dem steifen unteren Bauteil, mit einer vom elastischen Körper unabhängigen Meßanordnung, die mit den steifen Bauteilen fest verbunden ist und die aus wenigstens einem kapazitiven Fühler besteht, der einen ersten Abschnitt (4) und einen zweiten Abschnitt (5) aufweist, wobei jeder Abschnitt derart ausgestaltet ist, daß er eine ebene Oberfläche aufweist, welche wenigstens eine ebene Elektrode trägt, wobei die Anordnung dieser Abschnitte derart ist, daß die Elektroden des ersten Abschnitts sich gegenüber den Elektroden des zweiten Abschnitts befinden und durch ein Dielektrikum voneinander getrennt sind; der kapazitive Fühler weist eine Vielzahl ebener Elektroden auf, wobei wenigstens eine Elektrode des einen der Abschnitte (4, 5) des Fühlers bezüglich der Elektroden des anderen Abschnitts derart verschoben ist, daß je nach der Art der Zusammenschaltung und der Kopplung der Elektroden der Fühler als Differentialfühler oder als Abstandsfühler wirkt, und mit einer Meßeinrichtung (22), die mit dem kapazitiven Fühler verbunden ist und eine elektronische Anordnung aufweist zur Verarbeitung der von den verschiedenen Kopplungsmöglichkeiten der Elektroden stammenden Signale und die die Messung sämtlicher Freiheitsgrade einer Relativverschiebung der beiden steifen Bauteile ermöglicht.

2. Vorrichtung nach Anspruch 1, dadurch gekennzeichnet, daß der erste Abschnitt und der zweite Abschnitt, die den Fühler bilden, aus isolierenden Scheiben bestehen, in denen die elektronische Anordnung, die mit den Elektroden verbunden ist, einen monolithischen integrierten Schaltkreis bildet, der in die Vorrichtung eingebettet ist.

3. Vorrichtung nach einem der Ansprüche 1 und 2, dadurch gekennzeichnet, daß der elastische Körper (3) aus einem Hohlzylinder besteht, der an seinen beiden Enden steife Ringe aufweist und in seinem Mittenbereich ein elastisches ausgeschnittenes Bauteil (8) aufweist, das mit Aussparungen und gekrümmten Rippen versehen ist.

4. Vorrichtung nach einem der Ansprüche 1 und 2, dadurch gekennzeichnet, daß der elastische Körper (3) aus einem durchbrochenen Hohlzylinder besteht.

**Claims**

1. Force measuring device, comprising an upper rigid element (1), a lower rigid element (2) and a resilient member (3) adapted to connect the upper rigid element and the lower rigid element, measuring means independent of the resilient member and fast with the rigid element, formed of at least one capacitive pick-up comprising a first part (4) and a second part (5), each part being arranged so as to present a flat surface supporting at least one flat electrode, the arrangement of these parts being such that the electrodes of the first part are situated facing the electrodes of the second part, separated by a dielectric; the capacitive pick-up comprising a plurality of flat electrodes, at least one electrode of one of the two parts (4, 5) of the pick-up being offset relatively to the electrodes of the other part, in such manner that, according to the mode of association and coupling of the electrodes, the pick-up functions as a differential pick-up or a proximity pick-up, and a measuring device (22) connected to the capacitive pick-up and comprising electronic means intended for the processing of the signals which are the product of the various possibilities of coupling the electrodes and permitting the measurement of all the degrees of freedom of a relative displacement of the two rigid elements.

2. Device according to claim 1, characterized in that the first part and the second part constituting the pick-up consist of insulating discs, and in which the electronic means connected to the electrodes form a monolithic integrated circuit incorporated into the device.

3. Device according to one of claims 1 and 2, characterized in that the resilient member (3) is formed by a hollow cylinder, which is so machined as to present rigid rings at its two ends and, in its central part, a resilient element of cutout form (8), comprising elbows and ribs.

4. Device according to one of claims 1 and 2, characterized in that the resilient member (3) is formed by a perforated hollow cylinder.

0 123 646

FIG.1

FIG.2

FIG.3a

FIG.3b

1

FIG.4

FIG.5

FIG.6

FIG.7

FIG. 8a

FIG. 8 b

FIG.9a

FIG.9 b